# EUROPÄISCHE PATENTANMELDUNG

(11) **EP 4 205 857 A2**
(43) Veröffentlichungstag der Anmeldung: **05.07.2023**
(21) Anmeldenummer: 22212156.8
(22) Anmeldetag: 08.12.2022
(51) Int. Cl.: B03C 1/023, B03C 3/017, B03C 3/09, B03C 3/155, B03C 3/41, B03C 3/47

(54) **VORRICHTUNG ZUM FILTERN EINES MIT PARTIKELN VERUNREINIGTEN LUFTSTROMS**

(30) Priorität: 08.12.2021 DE 102021132295
(71) Anmelder: RL Raumlufttechnik + Raumluftqualität GmbH, 53604 Bad Honnef (DE)
(72) Erfinder: Lerche, Christian, 01796 Pirna (DE); Lehmann, Jörg, 01723 Kesseldorf (DE); Siegmund, Helmut, 53604 Bad Honnef (DE)
(74) Vertreter: Schaumburg und Partner Patentanwälte mbB

(57) **Zusammenfassung**

Eine Vorrichtung zum Filtern eines mit Partikeln verunreinigten Luftstroms umfasst einen Luftkanal, durch den der verunreinigte Luftstrom in einer Strömungsrichtung strömt. Ferner umfasst die Vorrichtung ein Filtermedium zum Filtern des zugeführten verunreinigten Luftstroms und mindestens eine lonisationseinheit zum Ionisieren der Luft des verunreinigten Luftstroms. Die lonisationseinheit ist in Strömungsrichtung stromaufwärts vor dem Filtermediums angeordnet. Das Filtermedium umfasst eine Filtermatte aus einem Vliesmaterial und/oder einem Gewebematerial und eine luftdurchlässige Struktur aus einem elektrisch leitfähigen und magnetischem Material. Ein elektrisches Feld ist zwischen der lonisationseinheit und dem elektrisch leitfähigen Material vorhanden.

## Beschreibung

Die Erfindung betrifft eine Vorrichtung zum Filtern eines mit Partikeln und Aerosolen verunreinigten Luftstroms. Die Vorrichtung umfasst einen Luftkanal, durch den der verunreinigte und kohlendioxidbelastete, d.h. CO2 belastete, Luftstrom in einer Strömungsrichtung strömt, sowie ein Filtermedium zum Filtern des zugeführten verunreinigten Luftstroms. Ferner umfasst die Vorrichtung mindestens eine Ionisationseinheit zum Ionisieren der zugeführten verunreinigten Luft des Luftstroms, wobei die Ionisationseinheit in Strömungsrichtung stromaufwärts des Filtermediums, d.h. vor dem Filtermedium, angeordnet ist.

Luftfilter werden zur Reinigung der Zuluft und/oder Umluft in Lüftungsanlagen sowie zur Reinigung kontaminierter Abluft beispielsweise in Kernkraftanlagen, Laboratorien und Isolierstationen benutzt. Der Bedarf an reiner Luft für industrielle Prozesse und High-Tech-Umgebungen erschließt stetig neue Anwendungsgebiete für die Luftfiltration.

CO2-Luftfilter wiederum sind aus U-Booten und Bunkeranlagen in der Militärtechnik seit längerem bekannt. Auch in der Medizintechnik haben sich derartige Filter bei Narkosegeräten durchgesetzt. Solche -Filter werden auch CO2-Absorber bezeichnet. Im Bereich Lüftung und hier besonders Wohnraumlüftung sowie Umluftgeräte gibt es ebenfalls schon länger Geräte und Anlagen, die sich jedoch nicht durchsetzen konnten.

So sind im Dokument DE 198 42 632 A1 Lösungen beschrieben, die den CO2-Gehalt mittels eines CO2-Filters auf Basis Atemkalk in Fahrzeuginnenräumen beschränken soll. Aus dem Dokument KR 10 2016 0036 257 ist ein Umluftgerät für den Wohnbereich bekannt, welches CO2mittels Atemkalk reduziert.

Der dazugehörige Filter ist im Aufbau aus dem Dokument KR 10 2104 011 2111 bekannt und basiert auf einem CO2-absorbirenden Material und mehreren Lagen Filtermatten und Staubfiltern. Zudem werden verschiedene Stoffe zur Absorption verwendet. In dem Dokument DE 198 42 632 A1 sind neben Atemkalk, dessen Zusammensetzung nicht benannt ist, auch Lithiumhydroxid und Kaliumhyperoxid beschrieben.

Zur Abscheidung von Stäuben, Feinstäuben und Aerosolen gibt es eine Vielzahl unterschiedlicher Lösungen zur Luftfiltration. Zur Abscheidung von luftgetragenen Partikeln, Aerosolen oder Nebeln sind verschiedene Abscheidesysteme bekannt, wie z.B. Zyklone, Wäscher, elektrische Abscheider, mechanisch filternde Abscheider (Faserfilter), insbesondere Grobstaubfilter, Feinstaubfilter, Schwebstofffilter, EPA-, HEPA-, und ULPA-Filter, sowie adsorptive Filter, insbesondere Aktivkohlefilter.

In der Luft befinden sich eine Menge verschiedener Fremdstoffe hervorgerufen durch natürliche Prozesse, wie Winderosion, Verdunstung von den Meeren, Bodenerschütterungen und Verbrennungsvorgänge in industriellen Prozessen und Verbrennungsmotoren, Autoabgasen, Emissionen in Räumen sowie verschiedenen Material bearbeitungsvorgängen.

Aus gesundheitlicher Sicht ist neben dem Schadstoffgehalt des Staubes die Größe der Partikel der entscheidende Parameter. Partikel mit einem Durchmesser größer als 10 µm, der sogenannte Grobstaub, bleibt mehr oder minder gut an den Nasenhärchen oder den Schleimhäuten des Nasen-Rachenraums hängen. Kleinere und kleinste Staubpartikel (Feinstaub, ultrafeine Partikel) können über die Luftröhre und die Bronchien bis tief in die Lunge vordringen. Daher wird der Feinstaub auch als inhalierbarer bzw. als lungengängiger (alveolengängiger) Feinstaub bezeichnet.

Allgemein anerkannte Bezeichnungen für Feinstaub existieren allerdings nicht. In der Regel wird unter Feinstaub Staub mit einem aerodynamischen Durchmesser der Staubpartikel von weniger als 10 µm (PM10 = Particulate Matter 10 µm) verstanden. Die Staubfraktionen mit einer Partikelgröße <0,4 µm werden auch als Schwebstoffe bezeichnet.

Die Messgröße PM10 wurde an automatischen Messstationen zu Beginn des Jahres 2000 eingeführt und wird in vielen Ländern als Bezugsgröße für die Luftverschmutzung der Außenluft genutzt.

Die Fähigkeit eines Filters, Partikel abzuschneiden, beruht auf verschiedenen physikalischen und mechanischen Wirkprinzipien, wie Diffusion, Sperreffekt, Trägheitseffekt sowie Siebwirkung. Auch elektrostatische Kräfte zwischen den Partikeln und den Fasern haben hierbei eine Bedeutung.

Bei Filtration durch Siebwirkung können Partikel mit einem größeren Durchmesser als der freie Abstand zwischen zwei Fasern nicht durch den Filter dringen.

Bei Filtration durch Trägheitseffekt haben größere Partikel zu große Trägheitskräfte, um dem Luftstrom folgen zu können, wenn dieser durch eine Filterfaser oder Filteranordnung abgelenkt wird. Die Partikel bewegen sich in ihrer ursprünglichen Bahn weiter und bleiben an der Anströmseite des Filters haften. Der Trägheitseffekt nimmt mit steigender Luftgeschwindigkeit, größerem Partikeldurchmesser sowie kleinerem Faserdurchmesser zu.

Bei Filtration Sperreffekt (Interceptionseffekt) folgen kleine, leichte Partikel dem Luftstrom um die Filterfaser. Wenn der Mittelpunkt des Partikels einer Strömung folgt, die näher an die Faser kommt als der Durchmesser des Partikels, so wird dieser aufgefangen und bleibt haften. Der Sperreffekt ist unabhängig von der Luftgeschwindigkeit, soweit die Luftgeschwindigkeit und/oder die Faserstärke nicht so groß sind, dass sich das Strömungsbild um die Faser verändert. Mit steigendem Partikeldurchmesser, geringerem Faserdurchmesser und geringerem Abstand zwischen den Fasern nimmt der Sperreffekt zu. Ein Filtermaterial mit gutem Sperreffekt muss also so beschaffen sein, dass es eine große Anzahl feiner Fasern enthält, die gewöhnlich den gleichen Durchmesser haben wie die abzuscheidenden Partikel.

Bei Filtration durch Diffusionseffekt wiederum folgen Partikel < 1 µm nicht den Strömungslinien um die Faser. Sie werden von der Brownschen Molekularbewegung beeinflusst, d. h. sie werden von den Molekülen der Luft in Schwingung versetzt und bleiben bei Berührung mit den Filterfasern an diesen hängen. Die Wahrscheinlichkeit, dass Partikel mit den Fasern aufgrund des Diffusionseffektes in Berührung kommen, nimmt im Allgemeinen mit steigender Partikelgröße und zunehmender Faseranströmgeschwindigkeit ab.

Bei Filtration durch elektrostatische Anziehung werden elektrostatische Felder entweder in Form von Plattenkondensatoren als aktives Filterelement eingesetzt oder es können Fasern von synthetischen Filtermedien bei der Herstellung aufgeprägt werden. Dieses Aufprägen kann z.B. auf Metallplatten erfolgen, insbesondere auf Verbundstrukturen, die parallel zur Luftrichtung angeordnet sein können. Dadurch bildet sich um die Fasern bzw. Kollektoren ein elektrisches Feld, so dass die Fasern komplementär geladene Partikel anziehen. Es können auch elektrisch vorgeladene, d.h. elektrostatisch geladene, Filterfasern eingesetzt werden. Bei diesen baut sich nach Inbetriebnahme des Filters Ladung allmählich ab. Externe Umwelteinflüsse können diese Filtereffekte begünstigen oder schwächen. Filter der Gruppen ISO 16890 ePM10 bis ePM1 müssen im elektrostatisch vollständig entladenen Zustand mindestens 50% des Gruppenfraktionsabscheidegrades erreichen.

Ferner sind Elektrofilter bekannt, die ausschließlich nach elektrostatischen Wirkprinzipien arbeiten. Elektrofilter haben jedoch in der Lüftungs- und Klimatechnik aus Betriebssicherheits- und Kostengründen nur eine vergleichsweise geringe Bedeutung erlangt, da die notwendigen Spannungen weit über 20.000 V betragen können.

Für Lüftungsanlagen von besonderer Bedeutung sind Faserfilter. Diese ermöglichen einen definierten Luftzustand nach dem Filter, welcher über den Abscheidegrad des Filters generiert wird. Sind die Filter mit Laststoffen gesättigt, ermöglicht eine Überwachungsschaltung der Filterleistung, diese entsprechend zu wechseln. Diese Filter haben eine gewebte oder gepresste, siebartige Faserstruktur. Die Faserstruktur besteht meist aus Kunststoff- und/oder Glasfaservliesen. Der Abscheidegrad ist direkt proportional zur Faserdichte. Die Filter sind abhängig von ihrem Abscheidegrad in Filterklassen eingeteilt. Durch die jeweilige Faserdichte ergibt sich in einem luftführenden System ein davon abhängiger Druckverlust, d.h., je engmaschiger die Faserdichte bzw. die Faserstruktur ist, desto höher ist der Abscheidegrad und desto höher ist der erforderliche Luftdruck, um den Luftwiderstand des Filters zu überbrücken. Um einen höheren Abscheidegrad zu erreichen, muss demnach die Abscheideleistung des Gewebes, ohne seine genormte Engmaschigkeit zu ändern, erhöht werden.

Zum Erhöhen der Abscheideleistungen sind Filteranordnungen bekannt, die einen lonisator zum gezielten elektrostatischen Aufladen der dem Filter zugeführten Luft haben. Der lonisator ist bei diesen Anordnungen in Strömungsrichtung der zu filternden Luft vor dem Filtermedium der Filteranordnung angeordnet. Solche Anordnungen sind beispielsweise durch die Dokumente EP 2 786 769 B1, DE 100 07 523 C2 und EP 1 440 695 B1 offenbart. Diese bekannten Anordnungen nutzen die Ionisation zur Verbesserung des Abscheidegrades in Filtermedien. Die elektrostatische Aufladung der zugeführten Luft und die Generierung von negativen Sauerstoffionen führt zur Anziehung über die Coulomb'sche Kraft von anders geladenen Feinpartikeln, welche letztlich über elektrostatische Anziehung durch das Filtergewebe zusätzlich abgeschieden werden.

Dokument WO 2007/085430A1 offenbart ein Filter aus Filtergewebe, dem ein elektrostatischer Filter vorgesetzt ist, um Feinstaubfraktionen, die durch das nachgeordnete Filtergewebe durch dessen Maschenweite und die eingangs beschriebenen Filtereffekte nicht abgeschieden werden können, abzuscheiden.

Nachteilig bei allen bislang eingesetzten Verfahren mit Ionisation ist, dass keine definierte Reproduktion der Abscheideleistung in Abhängigkeit der lonisationsstärke und vor allem des damit verbundenen elektrischen Feldaufbaus möglich ist. Das heißt, bei dem bisherigen Einsatz von Ionisation kann in Zusammenhang mit den verwendeten Filtermedien keine definierte Reproduktion der erhöhten Abscheideleistung gewährleistet werden, welche die Filterleistung um einen definierten Betrag bezogen auf die Normparameter der Filter und deren Abscheideleistung oder Abscheidegrad verbessert.

Für die Gasabsorbtion oder -adsorbtion werden Granulate oder Schüttgute oder Vliesmaterialien, wie beispielsweise Zeolithe oder Aktivkohle, eingesetzt.

Für die CO2-Reduktion der Luft gibt es Luftfilter auf Basis von Atemkalk, welche ein Gemisch aus Natriumhydroxid und Calciumhydroxid, meist in Granulatform, das in eine Filterkassette verbracht wird, nutzen.

Nachteil dabei ist einerseits die schnelle Verschmutzung der oberflächenaktiven Substanzen. Andererseits müssen die meisten verwendeten absorbierenden Stoffe aufwendig hergestellt werden. Insbesondere können CO2-Absorber CO2 aufnehmen, ohne es wieder abgeben zu können. Meist gehen die absorbierenden Materialien der Absorber eine chemische Reaktion ein, womit der CO2-Filter oder CO2-Filteranteil nach einer bestimmten Zeit nicht weiter verwendbar ist, ausgetauscht und unter Umständen aufwendig entsorgt werden muss.

Aufgabe der Erfindung ist es, eine Vorrichtung zum Filtern eines mit Partikeln oder Gasen verunreinigten Luftstroms anzugeben, bei der der Abscheidegrad definiert und reproduzierbar verbessert ist. Insbesondere soll der Abscheidegrad von Luftfiltern aus synthetischem oder mineralischem Material und damit die Leistungsfähigkeit hinsichtlich der Abscheidung von Feinpartikeln und Aerosolen in Verbindung mit vorgeschalteter Ionisation verbessert werden.

Erfindungsgemäß wird die Aufgabe durch das Anlegen eines magnetischen Feldes am Gas- oder CO₂-Filtrationsmaterial und/oder dem Anlegen eines elektrischen Feldes am Gas- oder CO₂-Filtrationsmateial oder der Magnetisierung des Filtermaterials oder eingebauter magnetischer Teile oder Strukturen und vorherigem lonisieren der Gase oder des CO₂ gelöst.

Diese Aufgabe wird jeweils durch eine Vorrichtung mit den Merkmalen des Anspruchs 1 und des Anspruchs 14 gelöst. Vorteilhafte Weiterbildungen sind in den abhängigen Ansprüchen angegeben.

Durch die Vorrichtung mit den Merkmalen des Anspruchs 1 wird erreicht, dass durch das zwischen der Ionisationseinheit bzw. lonisator und der Struktur aus elektrisch leitendem Material ein elektrisches Feld erzeugt wird, durch das die Filterwirkung des Filterelements des Filtermediums definiert und reproduzierbar erhöht wird. Hierbei ist es vorteilhaft, wenn die Feldstärke des elektrischen Feldes zwischen der Ionisationseinheit und dem elektrisch leitenden Material höher ist als zwischen der Ionisationseinheit und dem die zu reinigende Zuluft führenden Luftkanals und gegenüber eventuellen Einbauten im Luftkanal.

Dabei wird die elektrostatische Aufladung des zu filternden Luftstroms bzw. Zuluftstroms über das Einstellen der elektrischen Feldstärke zwischen der Ionisationseinheit und dem elektrisch leitenden Material definiert gerichtet so erhöht, dass der Luftkanal geringer aufgeladen wird als das in Luftrichtung befindliche Filterelement des Filtermediums. Das Filterelement ist vorzugsweise ein Filterelement aus Vlies oder Gewebe, das in Kombination mit der vorgeschalteten Ionisation eingesetzt wird. Hierdurch kann ein Filterelement eingesetzt werden, das für eine erforderliche Filterwirkung / für einen erforderlichen Abscheidegrad ohne die erfindungsgemäße Ausbildung des elektrischen Feldes notwendigen Filterklasse mit wesentlich größeren Maschenweiten auskommt, da die Vorrichtung nach Anspruch 1 auch Partikel auf Basis elektrostatischer Anziehung abscheidet, die sonst nur mechanisch über geringere Maschenweiten herausgefiltert werden können. Hierdurch können in den meisten Anwendungsfällen Filterelemente mit einer geringeren Filterklasse bei gleicher Abscheideleistung / Filterwirkung eingesetzt werden, wodurch der Druckverlust durch die erfindungsgemäße Vorrichtung bei gleicher Filterleistung verringert ist.

Um die elektrostatische Abscheidung zu bewirken, wird ein elektrisches Feld im Luftkanal in Verbindung mit der Erzeugung von Kleinionen durch Austreten von Elektronen aus einem oder mehreren elektrisch geladenen Körpern der lonisationseinheit auf Basis des an sich bekannten Spitzeneffektes. In dem Luftkanal wird hierzu in Strömungsrichtung ein Filtermedium aus einem synthetischem oder mineralischem Filtermaterial zur mechanischen Abscheidung von Staubpartikeln angeordnet. Ferner ist eine oder mehrere Aufladungseinheiten in Form einer Anode oder eines als Anode dienenden Ionisators zur elektrostatischen Aufladung des zugeführten Luftstromes und der Erzeugung von Ionen in Abhängigkeit der elektrischen Feldstärke am Filtervlies sowie der Raumgeometrie für eine flächige nahezu konstante Feld- und damit lonendichte auf der angeströmten Seite des Filtermaterials vorgeschaltet.

Zum Ausbilden des erfindungsgemäßen elektrischen Feldes dient die Ionisationseinheit als erste Elektrode, insbesondere als Anode. Bekannte oberflächenableitende synthetische und/oder mineralische Filtermaterialien für Filterelemente haben nur eine geringe elektrische Leitfähigkeit, meist unter 10⁻⁶ S/m. Somit sind diese Materialien zur Ausbildung als zweite Elektrode bzw. als Kathode nicht geeignet. Um eine zusätzliche Abscheidung im Filtermaterial des Filterelements durch elektrostatische Anziehung dennoch zu erreichen, ist in das Filtermaterial eine luftdurchlässige Struktur aus einem elektrisch leitfähigen Material in das Filtermaterial integriert oder in Strömungsrichtung nach dem Filtermaterial angeordnet. Zum Integrieren der luftdurchlässigen Struktur aus einem elektrisch leitfähigen Material in das Filtermaterial können z.B. Metallspäne oder Metallfasern in das Filtermaterial eingebracht oder eingewebt werden. Zusätzlich oder alternativ kann die luftdurchlässige Struktur aus einem elektrisch leitfähigen Material in Strömungsrichtung nach dem Filtermaterial angeordnet und insbesondere als Drahtgitter oder Sieb ausgebildet sein.

Die elektrische Leitfähigkeit des verwendeten elektrisch leitfähigen Materials liegt dabei >> 10⁻⁵ S/m, vorzugsweise bei > 10⁻⁶ S/m, was für die meisten Metalle zutrifft.

Elektrischen Ladungen und geladenen Teilchen bewegen sich im elektrischen Feld entlang sogenannter Feldlinien. Bei elektrostatischen Feldern treten die Feldlinien aus metallischen Leitern senkrecht aus bzw. senkrecht ein und schneiden sich nicht. Auf Grundlage dieser Gesetzmäßigkeit wird das elektrische Feld durch Platzierung der entsprechenden Kathode parallel zum oder im Filtermaterial ausgebildet. Durch den senkrechten Eintritt der Feldlinien in die Kathode werden die über die durch die Ionisationseinheit geladenen Partikel, die aufgrund der Maschenweite des Filtermaterials allein nicht zurückgehalten werden, wiederum durch die elektrostatische Anziehung zwischen Partikel und Filtermaterial zurückgehalten und im bzw. am Filtermaterial verbleiben.

Feldausbildungen und die Feldstärken im Raum werden mit der elektrischen Feldstärke E=F/Q V/m mit F auf die Ladung wirkende Kraft und Q die Ladung selbst, bemessen. Zudem sind elektrische Felder Vektorfelder, in denen für jeden Raumpunkt die elektrische Feldstärke und die Richtung des elektrischen Feldes bestimmbar ist, also die Fähigkeit des elektrischen Feldes, eine Kraft auf Ladungen auszuüben. Die elektrische Flussdichte D kann ebenfalls zur Beschreibung des elektrischen Feldes verwendet werden. Die elektrische Flussdichte ist direkt proportional zum elektrischen Feld sowie abhängig von der elektrischen Feldkonstante *ε*₀, d.h. D = *ε*₀ ∗ *E*. Durch die Wahl des Materials, den Abstand zur Ionisationseinheit und der Webdichte bzw. Maschenweite des elektrisch leitfähigen Materials kann damit definiert die Flächenladungsdichte r= Q/A ermittelt und reproduzierbar eingestellt werden.

Aus diesen Grundgleichungen kann die Feldausbildung als Vektorgröße gerichtet und in ihrer Stärke beeinflusst werden. Die Ionisationseinheit dient gleichzeitig Anode zum Erzeugen des elektrischen Feldes zu einer Kathode bzw. zur Ladung der zu filternden Partikel. Hierdurch wird erreicht, dass eine definierte Feldstärke am Filtervlies dauerhaft und reproduzierbar vorhanden ist. Zusätzlich wird ein definierter lonenstrom entlang der Feldlinien mit einer definierten Abscheideleistung erzeugt.

Der Abstand a des als Anode dienenden lonenerzeugers, wobei der lonenerzeuger einen Ladungsaustritt in Richtung einer in oder nach einem Filtermaterial angeordneten Kathode sollte um mindestens Faktor 1,25 kleiner sein als Verhältnis des kürzesten Abstandes zwischen Anode und einer weiteren zur Anode nächstgelegenen Entladungsfläche. Eine als Entladungsfläche dienende elektrisch leitfähige Luftführung ist unter Beachtung des Winkels so auszubilden und anzuordnen, dass die Feldstärke an der Kathode in oder nach dem Filtermaterial höher ist, als die Feldstärke zwischen Anode und der nächsten durch die Luftführung oder sonstige Elemente gebildete Entladungsfläche. Die Ermittlung der genauen Lage der Anode zur Kathode kann durch die elektrische Feldstärke und die daraus abgeleiteten Parameter, wie z.B. der Flussdichte, durchgeführt werden. Die elektrische Feldstärke als Vektorgröße kann exakt in Richtung des Filtermaterials und der darin oder danach platzierten Kathode maximiert werden. Die Abscheideleistung der Vorrichtung zum Filtern eines Luftstroms kann bei einer geeigneten elektrischen Feldstärke durch die lonisierungsstärke, auch Kernzahl genannt, über die Anzahl der Ionen pro Volumeneinheit gängige Messgröße Ionen/cm³ gemessen und eingestellt werden. Um z.B. eine Abscheideleistung, einer nächsten höherwertigen Filterklasse zu erreichen, sind bei Strömungsquerschnitten von 592 mm x 592 mm ein oder mehrere Ionisatoren im Abstand von < 30 cm und einer Kernzahl von mind. 3,2 Millionen Kleinionen pro cm³ anzuordnen.

Es ist vorteilhaft, wenn die Ionisationseinheit als Anode und das elektrisch leitfähige Material als Kathode dient. Hierdurch ist ein einfacher Aufbau der Vorrichtung und eine sichere Bewegung von positiv geladenen Partikeln zum Filtermedium möglich. Die Partikel verbleiben durch die Ladung am bzw. im Filtermedium.

Ferner ist es vorteilhaft, wenn das elektrische Feld eine Kraft auf zumindest einen Teil der Partikel in Richtung der luftdurchlässigen Struktur und somit in Richtung des Filtermediums ausübt. Hierdurch werden die Partikel sicher zum Filtermedium bewegt.

Weiterhin ist es vorteilhaft, wenn die die Vorrichtung eine Spannungsversorgungseinheit hat, die das elektrische Feld zwischen der Ionisationseinheit und dem elektrisch leitfähigen Material erzeugt. Hierdurch ist ein einfacher Aufbau der Vorrichtung möglich.

Besonders vorteilhaft ist es, wenn das Filtermedium als luftdurchlässige Struktur aus einem elektrisch leitfähigen Material ein Drahtgitter oder ein Sieb aus elektrisch leitfähigem Material umfasst. Hierdurch kann die zweite Elektrode, z.B. die Kathode, durch einfach aufgebaute und einfach herstellbare Elemente bereitgestellt werden, die einen geringen Luftwiderstand haben und dadurch nur einen geringen Druckverlust verursachen.

Das elektrisch leitfähige Material kann eine elektrische Leitfähigkeit im Bereich von 10⁵ S/m bis 10⁸ S/m, vorzugsweise im Bereich von 10⁶ S/m bis 10⁷ S/m, haben. Hierdurch kann das Potential der zweiten Elektrode, z.B. der Kathode, einfach eingestellt werden.

Das Drahtgitter oder das Sieb können stromabwärts der Filtermatte, d.h. nach der Filtermatte, angeordnet ist sein. Ferner kann die Filtermatte die luftdurchlässige Struktur kontaktieren. Hierdurch ist ein sehr einfacher Aufbau der Vorrichtung möglich. Ferner ist ein solcher Aufbau wartungsfreundlich, da nur die Filtermatte getauscht und das Drahtgitter bzw. das Sieb können erforderlichenfalls einfach gereinigt werden.

Ferner ist es vorteilhaft, wenn die luftdurchlässige Struktur aus einem elektrisch leitfähigen Material in die Filtermatte integriert ist. Hierdurch ist ein einfacher und kompakter Aufbau der Vorrichtung möglich.

Hierbei kann das elektrisch leitfähige Material eine elektrische Leitfähigkeit im Bereich von 10⁵ S/m bis 10⁸ S/m, vorzugsweise im Bereich von 10⁶ S/m bis 10⁷ S/m, haben. Hierdurch kann das Potential der zweiten Elektrode, z.B. der Kathode, einfach eingestellt werden.

Ferner ist es vorteilhaft, wenn der Abstand zwischen der als erste Elektrode, z.B. als Anode, dienenden Ionisationseinheit und der als zweite Elektrode, z.B. als Kathode, dienenden luftdurchlässigen Struktur aus einem elektrisch leitfähigen Material kleiner ist als der Abstand zwischen der als erste Elektrode dienenden lonisationseinheit und weiteren elektrisch leitfähigen Teilen, insbesondere leitfähigen Elementen des Luftkanals. Alternativ oder zusätzlich kann die Feldstärke des elektrischen Feldes zwischen der als erste Elektrode dienenden Ionisationseinheit und der als zweite Elektrode dienenden luftdurchlässigen Struktur aus einem elektrisch leitfähigen Material größer ist als zwischen der Ionisationseinheit und weiteren elektrisch leitfähigen Elementen der Vorrichtung. Hierdurch wird sichergestellt, dass die elektrische Feldstärke zwischen der ersten und der zweiten Elektrode größer ist als zwischen der ersten Elektrode und weiteren Elementen der Vorrichtung.

Weiterhin ist es vorteilhaft, wenn die luftdurchlässige Struktur aus einem elektrisch leitfähigen Material mit einem Erdpotential der Vorrichtung elektrisch leitend verbunden ist oder kontinuierlich entgegengesetzt zur Ionisationseinheit gepolt wird und dass die Ionisationseinheit ein entgegengesetztes Potential gegenüber der luftdurchlässigen Struktur aus einem elektrisch leitfähigen Material hat.

Besonders vorteilhaft ist es, wenn die lonisationsleistung der Ionisationseinheit gemessen in Ionen pro cm³ und die Feldstärke des elektrischen Feldes durch die Leistung der Ionisationseinheit eingestellt werden. Die Ionisationsleistung wird auch als Kernzahl bezeichnet. Hierbei kann die Ionisationseinheit durch eine Steuereinheit der Vorrichtung entsprechend angesteuert werden. Hierdurch ist ein einfacher Aufbau sowie eine einfache Steuerung der Abscheideleitung der Vorrichtung möglich.

Besonders vorteilhaft ist es, wenn die Feldstärke des erzeugten elektrischen Feldes durch die Änderung des Abstandes zwischen der Ionisationseinheit und der luftdurchlässigen Struktur und/oder der Ladungsstärke (Q) an der Anode oder der Wahl des Kathodenmaterials, insbesondere der Dichte des Kathodenmaterials, einstellbar ist. Hierdurch kann die Abscheideleistung einfach eingestellt werden, ohne dass hierfür eine entsprechende Ansteuerung erforderlich ist. Jedoch kann zusätzlich die elektrische Feldstärke zwischen den beiden Elektroden und/oder die Ionisationsleistung eingestellt werden.

Besonders vorteilhaft ist es, wenn die Feldstärke des erzeugten elektrischen Feldes zwischen Ionisationseinheit und der luftdurchlässigen Struktur einen Wert im Bereich zwischen 130 V/m und der Grenze der Durchschlagsfestigkeit der Luft hat und wenn die Feldstärke des elektrischen Feldes zwischen der Ionisationseinheit und anderen elektrisch leitfähigen Elementen, insbesondere zwischen der lonisationseinheit und dem Luftkanal, einen geringeren Wert aufweist. Hierdurch wird sichergestellt, dass auf die Partikel eine Kraft in Richtung des Filtermediums bzw. der Filtermatte erfolgt.

Ferner kann die Innenseite des Luftkanals zumindest im Bereich zwischen lonisationseinheit und dem Filtermedium mit einem elektrischen Isolierstoff versehen sein. Alternativ kann der Luftkanal zumindest im Bereich zwischen lonisationseinheit und dem Filtermedium aus einem elektrischen Isolierstoff bestehen. Hierdurch kann einfach sichergestellt werden, dass die Partikel im Luftstrom sicher in Richtung des Filtermediums bewegt werden.

Besonders vorteilhaft ist es, wenn die Filtermatte wechselbar ist. Alternativ oder zusätzlich kann die luftdurchlässige Struktur aus einem elektrisch leitfähigen Material wechselbar sein. Hierdurch ist eine einfache Wartung möglich.

Ferner ist es vorteilhaft, wenn das Vliesmaterial oder das Gewebematerial Kunststofffasern oder Glasfasern umfassen. Vorzugsweise ist die elektrische Leitfähigkeit des Vliesmaterials oder Gewebematerials um mindestens eine Potenz geringer ist als die elektrische Leitfähigkeit der luftdurchlässigen Struktur. Hierdurch kann eine günstige und wirksame Filtermatte bereitgestellt werden.

Besonders vorteilhaft ist es, wenn das erzeugte elektrische Feld ein elektrostatisches Feld oder ein Wechselfeld ist. Somit kann auch eine bipolare Anordnung vorgesehen werden, um die Filterwirkung der Vorrichtung gegenüber bekannten Vorrichtungen zu verbessern.

Weiterhin ist es vorteilhaft, wenn die Ionisationseinheit negativ oder positive Ionen erzeugen kann, wobei die Ionisationseinheit derart ansteuerbar ist, dass zwischen der Erzeugung von positiven Ionen und negativen Ionen gewechselt werden kann. Hierzu kann eine bipolare Ionisationseinheit eingesetzt werden.

Ferner ist es vorteilhaft, wenn die Ionisationseinheit bzw. die lonisationseinheiten wechselbar montiert sind. Dieser Wechsel kann insbesondere unabhängig von dem Wechsel des Filtermediums bzw. der Fitermatte erfolgen. Hierdurch ist eine einfache Wartung der Vorrichtung möglich.

Das Vlies- oder Gewebematerial ist vorzugsweise ein elektrischer Isolator, wodurch sich diese Filtermaterialien aufladen können. Bei der vorliegenden Vorrichtung laden sich die Filtermaterialien insbesondere positiv auf. Die Aufladung wird insbesondere durch den von der Ionisationseinheit erzeugten lonenstrom auf bzw. die Aufladung wird durch den lonenstrom verstärkt. Diese Aufladung kann durch die Verbindung mit einem vorbestimmten Potential, beispielsweise dem Erdpotential, abgeleitet werden. Dadurch werden solche Stoffe auch als oberflächenleitende Stoffe bezeichnet. Solche oberflächenleitende Stoffe eignen sich besonders zum Einsatz als Filtermatte in der Vorrichtung.

Ferner ist es vorteilhaft, wenn die die zweite Elektrode, z.B. die Kathode, bildenden elektrisch leitfähigen Elementen in oder nach der Filtermatte in Draufsicht eine ausgeglichene Äquipotentialfläche aufweist, wobei sich die Äquipotentiallinien vorzugsweise um einen Schnittpunkt der kürzesten Linie zwischen der Ionisationseinheit und der zweiten Elektrode herum erstecken.

Bei einer Vorrichtung mit den Merkmalen des Anspruchs 14 wird durch das Anlegen eines Magnetfeldes am Gas- oder CO₂-Filtrationsmaterial und/oder dem Anlegen eines elektrischen Feldes am Gas- oder CO₂-Filtrationsmateial oder der Magnetisierung des Filtermaterials oder eingebauter magnetischer Teile oder Strukturen und vorherigem Ionisieren der Gase oder des CO₂ eine verbesserte Filterung von CO2 oder anderer Bestandteile des verunreinigten Luftstroms erfolgt.

Wird zusätzlich oder statt der Partikelabscheidung oder Aerosolabscheidung eine CO2-Redutkion oder Reduktion von ausgewählten Gasen, also eine Gasextraktion, angestrebt, so kann das Filtermedium bzw. eine Filtereinheit zusätzlich ein gas-oder CO2-absorbierendes oder adsorbierendes Material (allgemein Sorptionsmaterial) umfassen.

Bei einer vorteilhaften Ausführungsform kann das Filtermedium eine Filterkassette mit dem Sorptionsmaterial umfassen. Hierbei kann ein Sorptionsmaterial verwendet werden, welches vorzugsweise umweltschonend entsorgt werden kann, wie beispielsweise Atemkalk, Olivin, Zeolithe oder dafür bekannte MOFs (metalorganic frameworks) oder eine beliebige Kombination dieser Stoffe.

Es wurde erkannt, dass sich Gase mit Dipolcharakter oder in Trägersubstanzen mit Dipolcharakter, wie z.B. Wasser, gebundene Gase in der Nähe von magnetischen Feldern, d.h. mit Hilfe von Magnetfeldern, ablenken und aufkonzentrieren lassen. Durch diese Magnetfelder erfolgt zusätzlich eine erhöhte Abscheidung von magnetischen beeinflussbaren Fein- und Feinstpartikeln, wie beispielweise metallischen Stäuben oder Aerosolen, an den Magnetflächen des Filtermediums.

Vorzugsweise wird das elektrisch leitfähige Material der Kathode, also die luftdurchlässige Struktur aus einem elektrisch leitfähigen Material, welches geerdet ist, magnetisch beschichtet oder besteht aus einem magnetischen Material.

Durch den Dipolcharakter des Gases oder der Trägersubstanzen konzentriert sich das Gas oder CO2 an in der unmittelbaren Nähe der magnetischen Teile auf, was zu einer verbesserten Aufnahme durch Konzentrationserhöhung im oder am ebenfalls in der Nähe der magnetischen Strukturen befindlichen Ad- oder Absorber führt. Vorzugsweise wird das magnetische Material direkt im Filterelement oder zwischen einem granulatförmigen Sorptionsmaterial des Filterelements platziert.

Eine weitere vorzugsweise Ausführung ist, das magnetische Material als Platten, deren Vorder- und Rückseiten parallel zur Strömungsrichtung des verunreinigten Luftstroms sind geringe Abstände zueinander quer zur Strömungsrichtung haben, im Filtermedium bzw. in einer Filterkassette des Filtermediums angeordnet sind. Das Sorbtionsmaterial kann zwischen den Platten angeordnet sein. Hierdurch wird über eine magnetische Ablenkung der z.B. dipolaren Aerosole (Wasserdipol) das in Wassertröpfchen gelöste CO₂ dem CO₂ Speichermedium gezielt zugeführt und in der unmittelbaren Nähe des magnetischen Materials aufkonzentrieren.

Weitere Merkmale und Vorteile der Erfindung ergeben sich aus den Ansprüchen und der nachfolgenden Beschreibung bevorzugter Ausführungsformen, die anhand der beigefügten Zeichnungen beschrieben werden. Als offenbart gelten einzelne Merk-male der Ausführungsformen und sämtliche Kombinationen untereinander sowie in Kombination mit einzelnen Merkmalen oder Merkmalsgruppen der vorhergehenden Beschreibung und/oder in Kombination mit einzelnen Merkmalen oder Merkmalsgruppen der Ansprüche in beliebiger Weise miteinander.

Es zeigen:
- Fig. 1: eine Vorrichtung zum Filtern eines mit Partikeln verunreinigten Luftstroms gemäß einer ersten Ausführungsform,
- Fig. 2: eine Vorrichtung zum Filtern eines mit Partikeln verunreinigten Luftstroms gemäß einer zweiten Ausführungsform,
- Fig. 3: eine Vorrichtung zum Filtern eines mit Partikeln verunreinigten Luftstroms gemäß einer dritten Ausführungsform,
- Fig. 4: eine Vorrichtung zum Filtern eines mit Partikeln verunreinigten Luftstroms gemäß einer vierten Ausführungsform,
- Fig. 5: einen Ausschnitt einer Vorrichtung zum Filtern eines mit Partikeln verunreinigten Luftstroms mit einem ersten Filterelement,
- Fig. 6: einen Ausschnitt einer Vorrichtung zum Filtern eines mit Partikeln verunreinigten Luftstroms mit einem zweiten Filterelement, und
- Fig. 7: einen Filter zur Abscheidung dipolbehafteter Gase oder Trrägersubstanzen oder magnetisch beeinflußbarer Partikel.

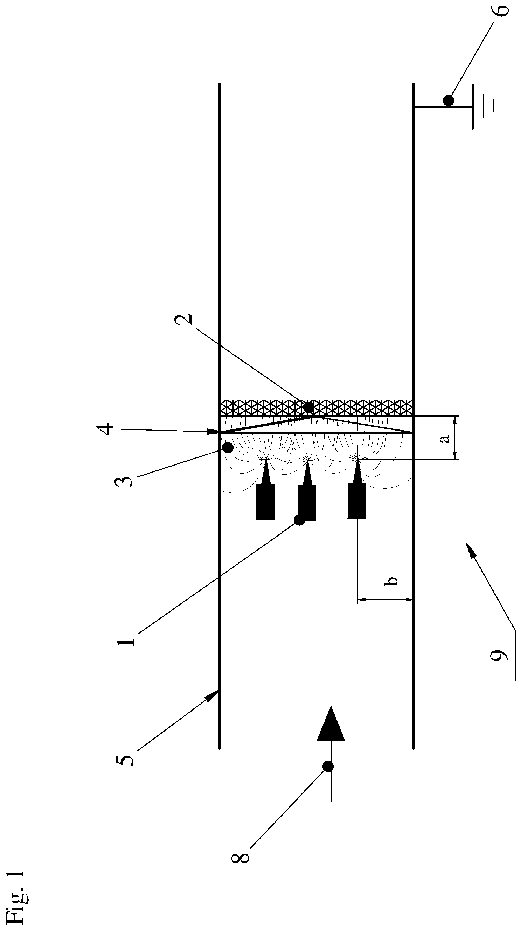

Fig. 1 zeigt eine Vorrichtung zum Filtern eines mit Partikeln verunreinigten Luftstroms gemäß einer ersten Ausführungsform. In einer Luftführung, vorzugsweise in einem Luftkanal 5, werden als Anode dienende Ionisatoren 1 so angeordnet, dass sich ein elektrisch es Feld 3 in Richtung des Filterelements 4, welches als Flachfilter vorliegt, und des nach dem Filterelement 4 angeordneten als Kathode dienenden elektrisch leitenden Materials 2, das als luftdurchlässiges Metallgitter ausgeführt ist, ausbildet. Das Filterelement 4 dient zur mechanischen Abscheidung von Laststoffen und ist so angeordnet, dass es in Form eines Luftwiderstandes die luftgetragenen Partikel mechanisch zurückhalten, also abscheiden, kann.

Der Luftkanal 5 und das elektrisch leitende Material 2 sind jeweils durch eine elektrische Ableitung 6 geerdet. Um ein flächiges homogenes Feld im Bereich des Filterelements 4 zu erzeugen, sind mehrere Ionisatoren 1 als lonisationseinheiten räumlich angeordnet. Dabei sind die Ionisatoren 1 mit ihren Abständen a zum Filterelement 4 und b zum Luftkanal 5 so platziert, dass sich das elektrische Feld 3 hauptsächlich zum elektrisch leitenden Material 2 hin ausbildet.

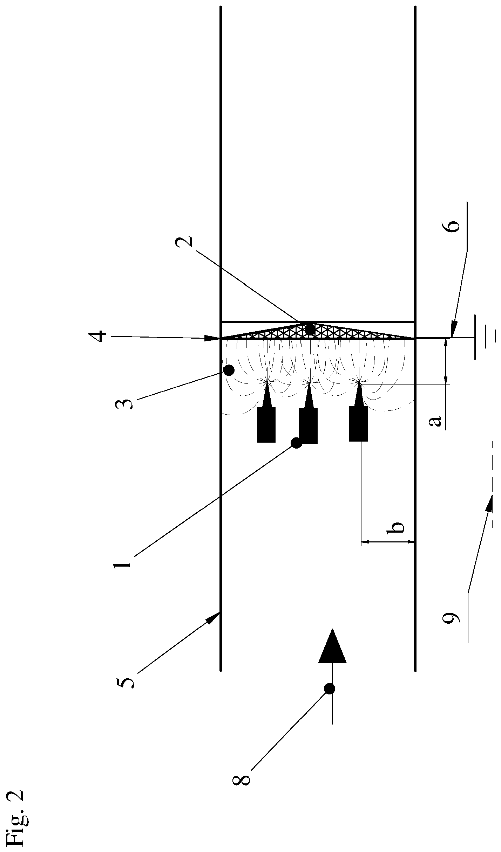

Fig. 2 zeigt eine Vorrichtung zum Filtern eines mit Partikeln verunreinigten Luftstroms gemäß einer zweiten Ausführungsform. Elemente mit gleichem Aufbau und/oder gleicher Funktion haben dieselben Bezugszeichen. In einer Luftführung, vorzugsweise in einem Luftkanal 5, werden als Anode dienende Ionisatoren 1 so angeordnet, dass sich ein elektrisch es Feld 3 in Richtung des Filterelements 4, welches als Flachfilter vorliegt, und des in das Filterelement 4 eingearbeiteten elektrisch leitenden als Kathode dienenden Materials 2, ausbildet. Das Filterelement 4 dient zur mechanischen Abscheidung von Laststoffen und ist so angeordnet, dass es in Form eines Luftwiderstandes die luftgetragenen Partikel mechanisch zurückhalten, also abscheiden, kann.

Der Luftkanal 5 und das elektrisch leitende Material 2 sind jeweils durch eine elektrische Ableitung 6 geerdet. Um ein flächiges homogenes Feld im Bereich des Filterelements 4 zu erzeugen, sind mehrere Ionisatoren 1 als lonisationseinheiten räumlich angeordnet. Dabei sind die Ionisatoren 1 mit ihren Abständen a zum Filterelement 4 und b zum Luftkanal 5 so platziert, dass sich das elektrische Feld 3 hauptsächlich zum elektrisch leitenden Material 2 hin ausbildet.

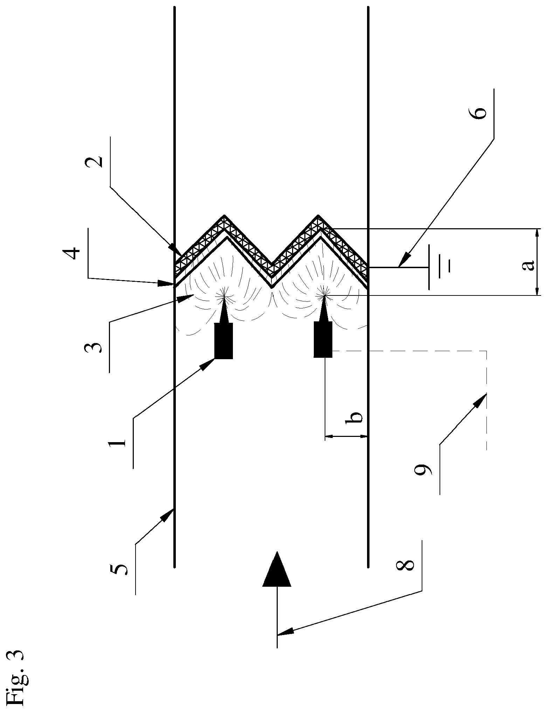

Fig. 3 zeigt eine Vorrichtung zum Filtern eines mit Partikeln verunreinigten Luftstroms gemäß einer dritten Ausführungsform. In einer Luftführung, vorzugsweise in einem Luftkanal 5, werden als Anode dienende Ionisatoren 1 so angeordnet, dass sich ein elektrisches Feld 3 in Richtung des Filterelements 4 und des dem Filterelement 4 nachgeordneten als Kathode dienenden elektrisch leitenden Materials 2, ausbildet. Das elektrisch leitfähige Material 2 ist luftdurchlässig und aus einem Material mit einer hohen elektrischen Leitfähigkeit ausgeführt. Das Filterelement 4 dient zur mechanischen Abscheidung von Laststoffen, ist so angeordnet, dass es in Form eines räumlichen Luftwiderstandes als Taschenfilter die luftgetragenen Partikel mechanisch zurückhalten, also abscheiden, kann. Die elektrische Feldstärke zwischen dem als Anode dienenden lonisator 1 und dem als Kathode dienenden elektrisch leitenden Material 2 beträgt > 130 V/m und ist kleiner als die Durchschlagsfestigkeit der Luft des zu filternden Luftstroms 8. Zur kontinuierlichen Aufrechterhaltung der Potentialdifferenz zwischen der Anode und der Kathode ist das elektrisch leitende Material 2 mit einer elektrischen Ableitung 6 versehen und über diese vorzugsweise mit dem Erdpotential verbunden. Dabei sind die Ionisatoren 1 mit ihren Abständen a zum Filterelement 4 und b zur Luftkanal 5 so platziert, dass sich das elektrische Feld 3 hauptsächlich zum elektrisch leitenden Material 2 ausbildet.

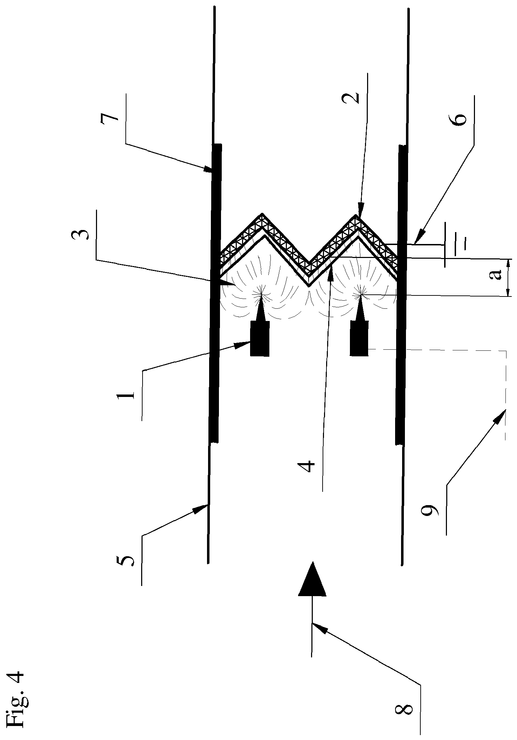

Fig. 4 zeigt eine Vorrichtung zum Filtern eines mit Partikeln verunreinigten Luftstroms gemäß einer vierten Ausführungsform. Die Vorrichtung nach Figur 4 unterscheidet sich von der Vorrichtung nach Fig. 3 dadurch, dass zur Unterdrückung einer Feldausbildung im Luftkanal 5 dieser im Bereich der Ionisatoren 1 bis mind. zum Filterelement 4 mit einem elektrischen Isolierstoff 7 ausgekleidet ist.

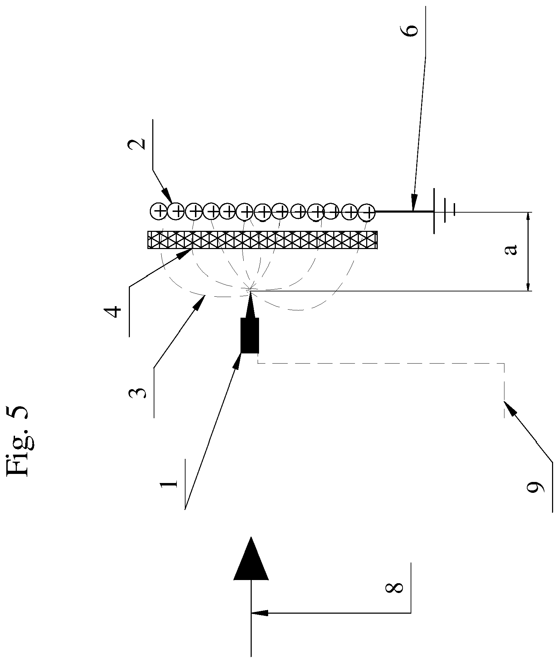

Fig. 5 zeigt einen Ausschnitt einer Vorrichtung zum Filtern eines mit Partikeln verunreinigten Luftstroms 8 mit einem ersten Filterelement. Das erste Filterelement umfasst eine Filtermatte 4 und eine der Filtermatte 4 nachgeordnete Struktur aus einen elektrisch leitenden Material 2, das zur Ableitung 6 dient. Hierzu ist das elektrisch leitende Material mit einem Erdpotential verbunden. Fig. 5 stellt den grundsätzlichen Aufbau der Filtereinheit mit Ionisatoren 1, Filterelement 4, dem elektrisch leitenden und luftdurchlässigem Material 2, der elektrischen Ableitung 6 und dem verunreinigten Luftstrom 8 dar. Dabei wird in Luftrichtung 8 vor der Filtermatte 4 der lonisator 1 als Anode platziert. Der lonisator 1 wird mit einer elektrischen Spannung 9 versorgt. Das der Filtermatte 4 nachgeordnete elektrisch leitende Material 2 ist mit einer elektrischen Ableitung 6 verbunden, so dass sich ein dauerhaftes und kontinuierliches elektrisches Feld 3 aufbauen kann. Die Feldstärke und die lonisationsstärke wird dabei durch den Abstand a zwischen lonisator 1 als Anode und der Kathode, welche durch das elektrisch leitende Material 2 gebildet wird, durch die Ladungsstärke am Ionisator 1, welche durch die Stärke der Stromversorgung 9 des Ionisators beeinflusst wird und durch die Permittivität des elektrisch leitenden Materials 2 eingestellt.

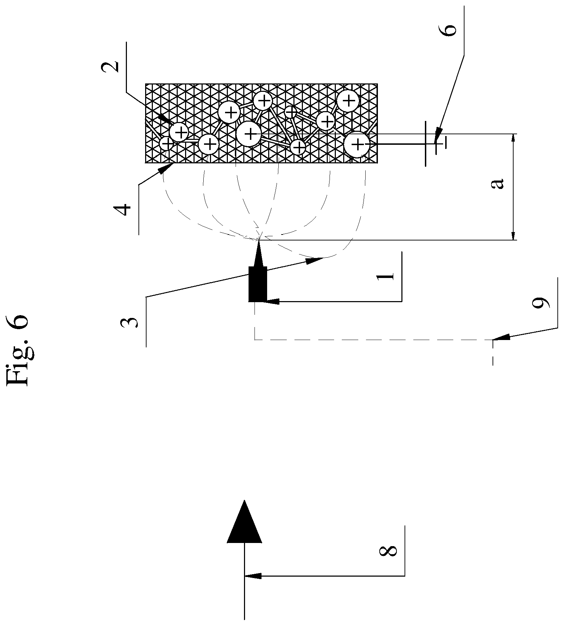

Fig. 6 zeigt einen Ausschnitt einer Vorrichtung zum Filtern eines mit Partikeln verunreinigten Luftstroms 8 mit einem zweiten Filterelement. Von der Vorrichtung nach Fig. 5 unterscheidet sich die Vorrichtung nach Fig. 6 dadurch, dass das zweite Filterelement eine in die Filtermatte 4 integrierte Struktur aus einen elektrisch leitenden Material 2 umfasst, das zur Ableitung 6 dient. Das in die Filtermatte 4 eingearbeitete elektrisch leitende Material 2 ist hierzu mit einer elektrischen Ableitung 6 verbunden, so dass sich ein dauerhaftes und kontinuierliches elektrisches Feld 3 aufbauen kann. Die Feldstärke und die lonisationsstärke wird dabei durch den Abstand a zwischen Ionisator 1 als Anode und der Kathode, welche durch das elektrisch leitende Material 2 gebildet wird, durch die Ladungsstärke am Ionisator 1, welche durch die Stärke der Stromversorgung 9 des Ionisators beeinflusst wird und durch die Permittivität des elektrisch leitenden Materials 2 eingestellt.

In den beschriebenen Ausführungsformen ist das elektrisch leitende Material 2 mit einem Erd- oder mit einem Massepotential der jeweiligen Vorrichtung verbunden. Bei anderen Ausführungsformen kann das elektrisch leitende Material 2 zum Ausbilden des elektrischen Feldes 3 mit einem anderen Potential, insbesondere einem negativen elektrischen Potential, verbunden sein. Auch kann bei anderen Ausführungsformen das elektrisch leitende Material 2 isoliert von dem Luftkanal 5 angeordnet sein.

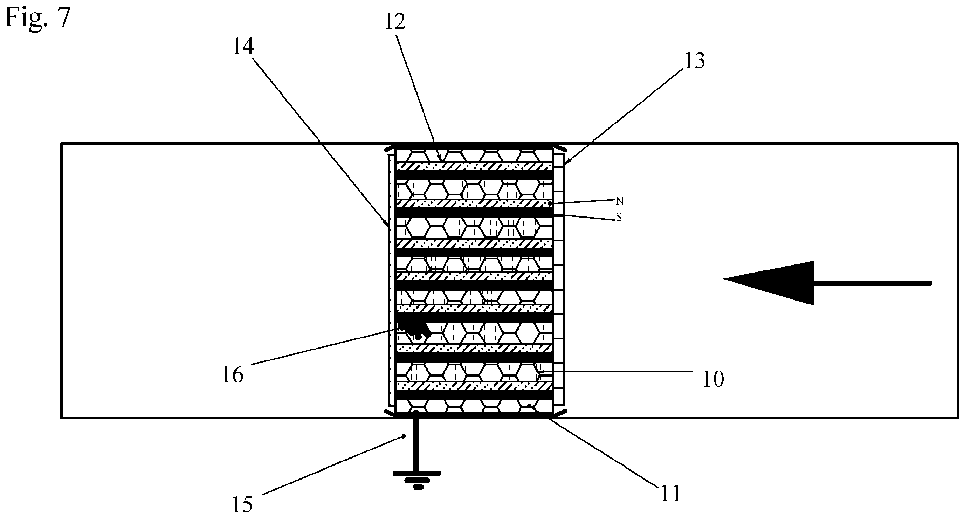

Fig. 7 zeigt eine Gasabsorbtions- und/oder Gasadsorbtionsanordnung zur Sorbtion eines zu filternden Bestandteils es verunreinigten Luftstroms 2, der die Anordnung in Richtung des dargestellten Pfeils durchströmt. Diese Anordnung dient als Luftfilter zur CO₂ Reduktion. Magnetische Platten 12 sind in Luftrichtung so angeordnet, dass sich zwischen den Platten 12 ein magnetisches Feld 10 in Abhängigkeit des Plattenabstandes aufbaut und ein CO2-Sorbtionsmaterial und/oder ein Filtermaterial 11 zwischen den Platten 12 angeordnet ist. Die Vorder- und Rückseite der Platten 12 sind parallel zum Luftstrom 2 angeordnet bzw. ausgerichtet.

Vor, d.h. stromaufwärts, der Plattenanordnung und dem Sorbtions- und/oder ein Filtermaterial 11 ist ein Filtervlies 13 zur definierten Abscheidung von Feinpartikeln oder Stäuben angeordnet. Nach, d.h. stromabwärts, der Plattenanordnung und dem Sorbtions- und/oder ein Filtermaterial 11 ist die Filtereinheit gegen ungewolltes Mitdriften von Sorbtions- und/oder ein Filtermaterial ein weiteres Filtervlies 14 angeordnet. Die Platten 12 im Filter sind mit dem Erdpotential 15 verbunden, d.h. sie sind geerdet). In der Filtereinheit konzentriert sich das dipolbehaftete Gas, speziell das in Wassertröpfchen gebundene CO2, entsprechend seine Poolung am Süd-oder Nordpol der Magnetflächen unmittelbar am Sorbtions- und/oder ein Filtermaterial 11, was zu einer erhöhten Aufkonzentration 16 und zu einer erhöhten Aufnahme von CO2 und anderer zu filternder Stoffe am Sorbtions- und/oder ein Filtermaterial 11 führt.

### Bezugszeichenliste

- 1: ionisationseinheit, lonisator
- 2: elektrisch leitendes Material
- 3: elektrisches Feld
- 4: Filterelement
- 5: Luftkanal
- 6: elektrische Ableitung
- 7: elektrischer Isolierstoff
- 8: verunreinigter Luftstrom
- 9: Stromversorgung des Ionisators
- a, b: Abstand
- 10: magnetisches Feld
- 11: Sorbtionsmaterial
- 12: Filterabdeckung
- 13: Filtervlies anströmseitig
- 14: Filtevlies abstömseitig
- 15: Erdung
- 16: Aufkonzentration

## Patentansprüche

1. Vorrichtung zum Filtern eines mit Partikeln verunreinigten Luftstroms,
mit einem Luftkanal (5), durch den der verunreinigte Luftstrom in einer Strömungsrichtung strömt,
mit einem Filtermedium (4) zum Filtern des zugeführten verunreinigten Luftstroms (8),
mit mindestens einer Ionisationseinheit (1) zum Ionisieren der Luft des verunreinigten Luftstroms (8), wobei die Ionisationseinheit (1) in Strömungsrichtung stromaufwärts vor dem Filtermedium (4) angeordnet ist,
wobei das Filtermedium (4) eine Filtermatte aus einem Vliesmaterial und/oder einem Gewebematerial und einer nachgeordneten oder in die Filtermatte eingearbeiteten luftdurchlässige Struktur aus einem elektrisch leitfähigen Material (2) umfasst, wobei ein elektrisches Feld (3) zwischen der Ionisationseinheit (1) und dem elektrisch leitfähigen Material (2) vorhanden ist.

2. Vorrichtung nach einem der vorhergehenden Ansprüche, **dadurch gekennzeichnet, dass** die Ionisationseinheit (1) als Anode und das elektrisch leitfähige Material (2) als Kathode dient.

3. Vorrichtung nach einem der vorhergehenden Ansprüche, **dadurch gekennzeichnet, dass** das elektrische Feld (3) eine Kraft auf zumindest einen Teil der Partikel in Richtung der luftdurchlässigen Struktur und somit in Richtung des Filtermediums (4) ausübt.

4. Vorrichtung nach einem der vorhergehenden Ansprüche, **dadurch gekennzeichnet, dass** die die Vorrichtung eine Spannungsversorgungseinheit hat, die das elektrische Feld (3) zwischen der Ionisationseinheit (1) und dem elektrisch leitfähigen Material (2) erzeugt.

5. Vorrichtung nach einem der vorhergehenden Ansprüche, **dadurch gekennzeichnet, dass** das Filtermedium (4) als luftdurchlässige Struktur aus einem elektrisch leitfähigen Material (2) ein Drahtgitter oder ein Sieb aus elektrisch leitfähigem Material (2) umfasst, wobei das elektrisch leitfähige Material (2) eine elektrische Leitfähigkeit im Bereich von 10¹ S/m bis 10⁸ S/m, vorzugsweise im Bereich von 10⁶ S/m bis 10⁷ S/m, hat, und wobei das Drahtgitter oder das Sieb vorzugsweise stromabwärts der Filtermatte angeordnet ist, und wobei die Filtermatte vorzugsweise die luftdurchlässige Struktur kontaktiert.

6. Vorrichtung nach einem der vorhergehenden Ansprüche, **dadurch gekennzeichnet, dass** die luftdurchlässige Struktur aus einem elektrisch leitfähigen Material in die Filtermatte integriert ist, wobei das elektrisch leitfähige Material eine elektrische Leitfähigkeit im Bereich von 10¹ S/m bis 10⁸ S/m, vorzugsweise im Bereich von 10⁶ S/m bis 10⁷ S/m, hat.

7. Vorrichtung nach einem der vorhergehenden Ansprüche, **dadurch gekennzeichnet, dass** der Abstand (a) zwischen der als Anode dienenden lonisationseinheit (1) und der als Kathode dienenden luftdurchlässigen Struktur aus einem elektrisch leitfähigen Material (2) kleiner ist als der Abstand (b) zwischen der als Anode dienenden Ionisationseinheit (1) und weiteren elektrisch leitfähigen Teilen, insbesondere leitfähigen Elementen des Luftkanals (5),
und/oder dass die Feldstärke des elektrischen Feldes zwischen der als Anode dienenden Ionisationseinheit (1) und der als Kathode dienenden luftdurchlässigen Struktur aus einem elektrisch leitfähigen Material (2) größer ist als zwischen der Ionisationseinheit (1) und weiteren elektrisch leitfähigen Elementen (5) der Vorrichtung.

8. Vorrichtung nach einem der vorhergehenden Ansprüche, **dadurch gekennzeichnet, dass** die luftdurchlässige Struktur aus einem elektrisch leitfähigen Material (2) mit einem Erdpotential (15) der Vorrichtung elektrisch leitend verbunden ist und dass die Ionisationseinheit (1) ein positives Potential gegenüber der luftdurchlässigen Struktur aus einem elektrisch leitfähigen Material (2) hat.

9. Vorrichtung nach einem der vorhergehenden Ansprüche, **dadurch gekennzeichnet, dass** die Ionisationsleistung der Ionisationseinheit (1) gemessen in Ionen pro cm³ und die Feldstärke des elektrischen Feldes durch die Leistung der Ionisationseinheit (1) eingestellt werden.

10. Vorrichtung nach einem der vorhergehenden Ansprüche, **dadurch gekennzeichnet, dass** die Feldstärke des erzeugten elektrischen Feldes durch die Änderung des Abstandes (a) zwischen der Ionisationseinheit (1) und der luftdurchlässigen Struktur (2) und/oder der Ladungsstärke (Q) an der Anode oder der Wahl des Kathodenmaterials, insbesondere der Dichte des Kathodenmaterials, einstellbar ist.

11. Vorrichtung nach einem der vorhergehenden Ansprüche, **dadurch gekennzeichnet, dass** die Feldstärke des erzeugten elektrischen Feldes zwischen lonisationseinheit (1) und der luftdurchlässigen Struktur (2) einen Wert im Bereich zwischen 130 V/m und der Durchschlagsfestigkeit der Luft hat und dass die Feldstärke des elektrischen Feldes zwischen der Ionisationseinheit (1) und anderen elektrisch leitfähigen Elementen (5), insbesondere zwischen der Ionisationseinheit (1) und dem Luftkanal (5), kleiner ist.

12. Vorrichtung nach einem der vorhergehenden Ansprüche, **dadurch gekennzeichnet, dass** die Innenseite des Luftkanals (5) zumindest im Bereich zwischen Ionisationseinheit (1) und dem Filtermedium (2) mit einem elektrischen Isolierstoff versehen ist oder dass der Luftkanal zumindest im Bereich zwischen Ionisationseinheit (1) und dem Filtermedium (2) aus einem elektrischen Isolierstoff besteht.

13. Vorrichtung nach einem der vorhergehenden Ansprüche, **dadurch gekennzeichnet, dass** die Filtermatte (4) und/oder dass die luftdurchlässige Struktur aus einem elektrisch leitfähigen Material (2) einzeln oder zusammen wechselbar ist.

14. Vorrichtung insbesondere nach einem der vorhergehenden Ansprüche, **dadurch gekennzeichnet, dass** die Vorrichtung umfasst:
einen Luftkanal (5), durch den der verunreinigte Luftstrom in einer Strömungsrichtung strömt,
ein Filtermedium (4) zum Filtern des zugeführten verunreinigten Luftstroms (8),
wobei das Filtermedium eine Gasabsorbtions- und/oder Gasadsorbtionsanordnung zur Sorbtion eines zu filternden Bestandteils es verunreinigten Luftstroms (8) umfasst,
wobei die Gasabsorbtions- und/oder Gasadsorbtionsanordnung magnetische Elemente (12) aus einem magnetischen Material enthält,
wobei die magnetischen Elemente (12) magnetisch beeinflußbare Gase und/oder in magnetisch beeinflußbaren Trägersubstanzen aufgenommene Gase des Trägerluftstroms (2) in Richtung eines Filtermaterials (11) der Gasabsorbtions- und/oder Gasadsorbtionsanordnung ablenken und/oder wobei die magnetischen Elemente (12) magnetisch beeinflußbare Gase und/oder in magnetisch beeinflußbaren Trägersubstanzen aufgenommene Gase des Trägerluftstroms (2) an den magnetischen Elementen (12) konzentrieren.

15. Vorrichtung nach Anspruch 14, **dadurch gekennzeichnet, dass** das magnetische Material (12) elektrisch leitend und geerdet ist.
